# EUROPÄISCHE PATENTANMELDUNG

(11) **EP 0 908 822 A2**
(43) Veröffentlichungstag der Anmeldung: **14.04.1999**
(21) Anmeldenummer: 98203324.3
(22) Anmeldetag: 01.10.1998
(51) Int. Cl.: G06F 11/00, H04B 1/08

(54) **Steuerschaltung für einen Microcontroller**

(30) Priorität: 08.10.1997 DE 19744375
(71) Anmelder: Philips Patentverwaltung GmbH, 22335 Hamburg (DE); Koninklijke Philips Electronics N.V., 5621 BA Eindhoven (NL)
(72) Erfinder: Schmidt, Thomas, c/o Philips Patentverwaltung GmbH, 22335 Hamburg (DE); Knobl, Karl-Heinz, Philips Patentverwaltung GmbH, 22335 Hamburg (DE)
(74) Vertreter: von Laue, Hanns-Ulrich, Dipl.-Ing.

(57) **Zusammenfassung**

Es wird eine außerhalb eines Microcontrollers realisierte Steuerschaltung beschrieben, welche zur Steuerung, Unterstützung und Überwachung des Microcontrollers vorgesehen ist. Hierzu ist vorgesehen, daß der Steuerschaltung (2) Funktionssignale zugeführt werden, welche vorgebbaren Funktionszuständen eines Gerätes (12,13,14) zugeordnet sind, welches von dem Microcontroller (1) gesteuert wird, daß die Steuerschaltung (2) bei Veränderung der Funktionssignale an den Microcontroller (1) ein Leseanforderungssignal gibt, welches den Microcontroller (1) veranlaßt, das veränderte externe Signal auszuwerten und/oder diesem zugeordnete Daten zu lesen und daß die Steuerschaltung (2) in dem Falle, daß der Microcontroller (1) sich bei Veränderung der Funktionssignale in einem inaktiven Zustand befindet, an diesen vor Abgabe des Leseanforderungssignals ein Reset-Signal gibt, das den Microcontroller (1) in einen aktiven Zustand versetzt, und nach Abgabe des Reset-Signals die Watchdog-Schaltung aktiviert.

## Beschreibung

Die Erfindung betrifft eine Steuerschaltung zur Steuerung, Unterstützung und Überwachung eines Microcontrollers, welche außerhalb des Microcontrollers, der mittels der Steuerschaltung rücksetzbar ist, aufgebaut ist und welche eine Watchdog-Schaltung aufweist.

Eine derartige Steuerschaltung ist aus der US 5,203,000 bekannt. Dort ist die Steuerschaltung getrennt von dem Microcontroller auf einem IC aufgebaut. Die Steuerschaltung führt eine Art Power Management durch, insbesondere während die Versorgungsspannung hoch- oder heruntergefahren wird. Ferner wird die Höhe der Versorgungsspannung überwacht. Die Steuerschaltung ist in der Lage, einen Reset des Microcontrollers vorzunehmen, der per Hand über einen Betätigungsknopf ausgelöst wird. Ferner beinhaltet die Steuerschaltung eine Watchdog-Schaltung.

Es ist Aufgabe der Erfindung, eine derartige Steuerschaltung dahingehend weiterzuentwickeln, daß sie einerseits den Microcontroller von noch mehr Funktionen entlasten kann und daß außerdem der Microcontroller als Energiesparfunktion möglichst oft inaktiv betrieben werden kann.

Diese Aufgabe ist erfindungsgemäß dadurch gelöst, daß der Steuerschaltung Funktionssignale zugeführt werden, welche vorgebbaren Funktionszuständen eines Gerätes zugeordnet sind, welches von dem Microcontroller gesteuert wird, daß die Steuerschaltung bei Veränderung der Funktionssignale an den Microcontroller ein Leseanforderungssignal gibt, welches den Microcontroller veranlaßt, das veränderte externe Signal auszuwerten und/oder diesem zugeordnete Daten zu lesen und daß die Steuerschaltung in dem Falle, daß der Microcontroller sich bei Veränderung der Funktionssignale in einem inaktiven Zustand befindet, an diesen vor Abgabe des Leseanforderungssignals ein Reset-Signal gibt, das den Microcontroller in einen aktiven Zustand versetzt, und nach Abgabe des Reset-Signals die Watchdog-Schaltung aktiviert.

Die der Steuerschaltung zugeführten Funktionssignale sind verknüpft mit bestimmten Funktionen des Gerätes, das von dem Microcontroller gesteuert wird. Wird also eine der Funktionen ausgelöst, so ändert sich das zugeordnete Funktionssignal. Dies wird von der Steuerschaltung erkannt und es wird an den Microcontroller von dieser ein Leseanforderungssignal gegeben, auf welches hin der Microcontroller zugeordnete Daten von der Steuerschaltung lesen muß. Bei diesen Daten kann es sich beispielsweise nur um die Signalisierung der Tatsache handeln, daß ein bestimmtes Funktionssignal ausgelöst worden ist, es können gegebenenfalls aber auch zugeordnete Daten übertragen werden. Auf diese Weise wird der Microcontroller von der ständigen Überwachung der Zustände der Funktionssignale entlastet. Diese Überwachung kann im Prinzip für beliebig viele Signale von der Steuerschaltung vorgenommen werden. Nur wenn eines der Funktionssignale sich ändert, wird ein entsprechendes Signal an den Microcontroller gegeben, der darauf reagieren muß. Somit muß der Microcontroller die Funktionssignale nicht laufend überwachen, sondern nur dann aktiv werden, wenn eines dieser Signale sich ändert. Es wird damit Rechenzeit gespart bzw. der Microcontroller kann sich auch dann, wenn die Funktionssignale zu überwachen sind, im inaktiven Modus befinden.

Je nach Anwendung und je nach Gerät, das von dem Microcontroller gesteuert wird, muß der Microcontroller nicht ständig aktiv sein. Er kann sich vielmehr in einem inaktiven Zustand befinden, der beispielsweise darin bestehen kann, daß er mit verminderter Taktfrequenz in einer Art Stromsparmodus läuft oder daß seine Energieversorgung ganz abgeschaltet ist. In diesem inaktiven Zustand kann der Microcontroller so lange bleiben wie keines der Funktionssignale sich ändert. Muß nach Änderung eines der Funktionssignale der Microcontroller eine entsprechende Funktion ausführen, so wird er zuvor von der Steuerschaltung in den aktiven Zustand versetzt. Nachdem dies mittels eines Reset-Signals geschehen ist, gibt die Steuerschaltung das oben erläuterte Leseanforderungssignal an den Microcontroller. Ferner wird nachfolgend mittels der Wachtdog-Schaltung überwacht, daß der Microcontroller ordnungsgemäß arbeitet.

Somit wird erreicht, daß der Microcontroller gegebenenfalls dann, wenn keines der Funktionssignale sich ändert, in dem inaktiven Zustand verbleiben kann. Hierdurch wird eine Energiesparfunktion erreicht.

Die Steuerschaltung arbeitet also abhängig davon, ob der Microcontroller sich bei Änderung eines der Funktionssignale im aktiven oder inaktiven Zustand befindet, indem er entweder nur das Leseanforderungssignal oder zunächst ein Reset-Signal und dann das Leseanforderungssignal an den Microcontroller abgibt.

Bei einer vorteilhaften Ausgestaltung der Erfindung gemäß Anspruch 2 wird die Steuerschaltung dazu eingesetzt, den Microcontroller eines Autoradios zu aktivieren, wenn bestimmte Funktionen am Autoradio ausgelöst werden. Insbesondere für diesen Einsatzzweck kann es vorteilhaft sein, den Microcontroller in den inaktiven und stromsparenden Modus zu versetzen, so lange sich keines der Funktionssignale ändert. Wird hingegen beispielsweise das Bedienteil des Autoradios aufgesetzt, muß der Microcontroller aktiviert werden, was mittels der Steuerschaltung geschieht. Auch für die Überwachung von Verkehrsnachrichten, zeitgesteuerten Aufnahmen der Verkehrsnachrichten oder Ähnliches ist die Steuerschaltung vorteilhaft einsetzbar.

Die Maßnahmen gemäß der weiteren Ausgestaltung gemäß Anspruch 3 gewährleisten, daß nach Abgabe eines Reset-Signals ein solches nicht wiederholt innerhalb einer vorgegebenen Zeitspanne abgegeben wird, damit der Microcontroller zunächst hochlaufen kann.

Gegebenenfalls können auch in der Steuerschaltung Fehler auftreten. Hierzu wird gemäß einer weiteren Ausgestaltung gemäß Anspruch 5 eine interne Überwachung des Taktsignals der Steuerschaltung vorgenommen. Bei Ausfall dieses Taktsignals wird eine entsprechende Fehlermeldung an den Microcontroller gegeben, dem hierdurch mitgeteilt wird, daß die Steuerschaltung nicht störungsfrei arbeitet und daß infolgedessen deren Signale nicht auswertbar sind. In diesem Falle muß der Microcontroller gegebenenfalls selbst eine Überwachung der Funktionssignale vornehmen. Durch diese Maßnahme ist jedoch gewährleistet, daß eine Störung der Steuerschaltung keine Störung des Gesamtsystems und insbesondere der Funktion des Microcontrollers herbeiführt.

Eine weitere Ausgestaltung der Erfindung gemäß Anspruch 6 kann vorteilhaft für zeitgesteuerte Überwachungen eingesetzt werden. Mittels des Vergleiches der beiden Werte kann beispielsweise zeitgesteuert eine Aufnahme von Verkehrsfunkdurchsagen erfolgen, ohne daß während der Zeit zwischen der Aufnahme der Microcontroller notwendigerweise aktiv sein müßte bzw. ohne daß der Microcontroller mit der Zeitüberwachung belastet ist.

Die Maßnahme gemäß der Ausgestaltung der Erfindung nach Anspruch 7 kann auch zur optischen Signalisierung von Fehlern in der Steuerschaltung eingesetzt werden. Ferner kann die Abgabe des Blinksignals bei Autoradios im inaktiven Zustand des Microcontrollers zur externen Signalisierung eines Diebstahlschutzes eingesetzt werden.

Mittels der Maßnahmen gemäß Anspruch 8 kann ein Diebstahlschutz in der Weise erreicht werden, daß die Steuerschaltung den Verlauf und die Dauer des Ausfalls des Bezugspotentials registriert bzw. registriert, wenn sich das Gerät nicht mehr am Bezugspotential befindet. Dies wird an den Microcontroller gemeldet, der entsprechend reagieren kann, beispielsweise durch Blockade der Funktionen des Gerätes.

Zur Überwachung der Höhe der Versorgungsspannung des Gerätes können vorteilhaft die Maßnahmen gemäß Anspruch 9 der Erfindung eingesetzt werden. Auch hier gilt, daß der Microcontroller mit der Zeitüberwachung nicht belastet ist.

Zur Energieeinsparung kann die Steuerschaltung gegebenenfalls gemäß Anspruch 10 vorteilhaft auch dazu eingesetzt werden, die Versorgungsspannung des Microcontrollers während der inaktiven Phasen völlig abzuschalten. In diesem Falle muß die Versorgungsspannung vor Abgabe des Reset-Signals wieder eingeschaltet werden. Hierdurch tritt eine weitere Energieeinsparung ein.

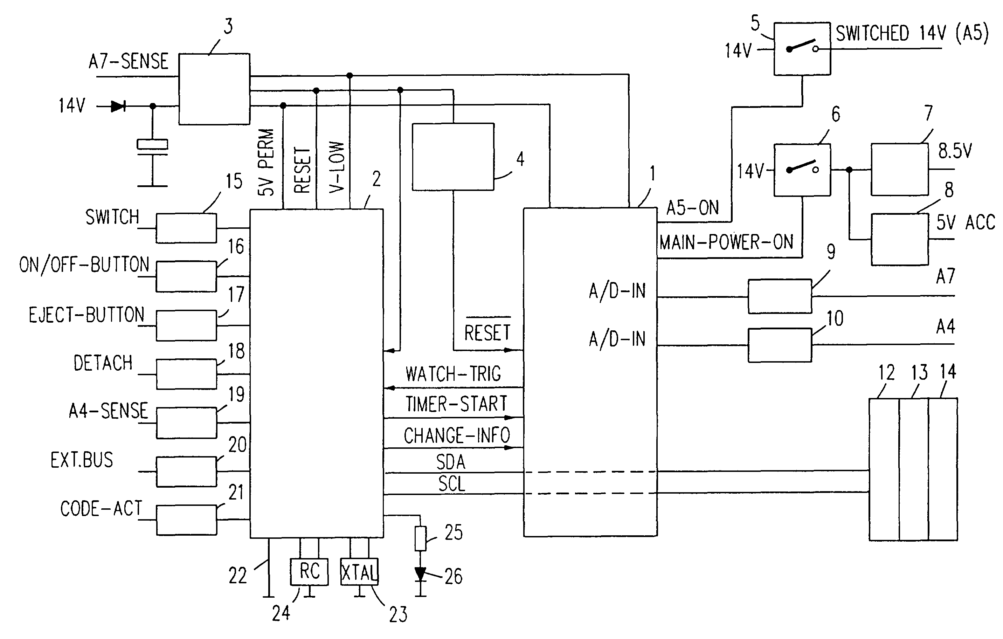

Nachfolgend wird ein Ausführungsbeispiel der Erfindung anhand der einzigen Figur der Zeichnung näher erläutert.

Die Figur zeigt in Form eines Blockschaltbildes einen Microcontroller 1 sowie eine erfindungsgemäße Steuerschaltung 2 mit einigen Peripherie-Schaltungselementen.

Die in der Figur in Form eines Blockschaltbildes dargestellte Schaltung kann beispielsweise in einem Autoradio vorgesehen sein und dessen Funktionen steuern.

Die Steuerschaltung 2 ist zur Steuerung, Unterstützung und Überwachung des Microcontrollers 1 vorgesehen.

Es ist eine Versorgungspotential-Schaltung 3 vorgesehen, der ein Dauerplussignal mit 14V sowie in in der Figur mit A7-SENSE bezeichnetes Signal zugeführt wird, bei dem es sich ebenfalls um ein Dauerplussignal des Fahrzeugs, in dem das Autoradio vorgesehen ist, handelt. Die Versorgungspotentialschaltung 3 überwacht diese Signale und erzeugt aus diesen Signalen ein 5V-Signal für den Microcontroller 1 und die Steuerschaltung 2, das in der Figur mit 5V PERM bezeichnet ist. Nach einem Ausfall der Spannungsversorgung erzeugt die Schaltung 3 ferner ein Reset-Signal, das der Steuerschaltung 2 zugeführt wird. Die Schaltung 3 generiert ferner ein in der Figur mit V-LOW bezeichnetes Signal, das dem Microcontroller einen Spannungseinbruch (z.B. unter 8V) auf der Versorgungsspannung (+ 14V) anzeigt und diesem so die Möglichkeit gibt, die Steuerschaltung in den Mode zu versetzen, der das Aufwecken des Microcontrollers ermöglicht. Der Microcontroller kann nun in den stromsparenden Mode versetzt werden, wodurch das Gesamtsystem (hier Autoradio) Spannungseinbrüche bis zu mehreren Sekunden ohne Datenverlust überstehen kann. Das V-LOW-Signal wird auch der Steuerschaltung zugeführt, um gegebenenfalls über die Steuerschaltung die Auswertung vornehmen zu können und das Gesamtsystem nach dem Spannungseinbruch (sofern dieser nicht zu einem Reset der Steuerschaltung geführt hat) durch einen Reset des Microcontrollers wieder in den Funktionszustand vor dem Spannungseinbruch zu versetzen.

Das Reset-Signal wird ferner mittels eines Invertierers 14 in invertierter Form dem Microcontroller 1 zugeführt, um diese nach einem Ausfall der Versorgungsspannung wieder in einen definierten Anfangszustand zu versetzen.

Der Microcontroller 1 liefert ein Signal A5-ON zugeführt, das mittels einer Schaltung 5 eine Spannunv von + 14V für das Gerät einschalten/abschalten kann, in der Figur mit SWITCHED 14V (A5) gekennzeichnet ist.

Es sind ferner Spannungsreglel 7 und 8 vorgesehen, welche Spannungen von 8,5V und 5V liefern. Der Microcontroller steuert einen Schalter 6 über das Signal MAIN-POWER-ON an .

Es sind ferner zwei Interfaceschaltungen 9 und 10 vorgesehen, denen das Dauerplussignal A7 bzw. ein geschaltetes Signal A4, das der Zündspannung eines Fahrzeugs entspricht, zugeführt werden. Die Analog-Digital-Wandler im Microcontroller werten diese Spannungen aus. Über diese Signale ist der Microcontroller 1 in der Lage, die Höhe dieser Potentiale zu überwachen.

Der Microcontroller 1 ist ferner über Steuerungsverbindungen mit einer I²C-Bus-Steuerschaltung 11 gekoppelt. Über derartige I²C-Bus-Verbindungen werden Steuerungsaufgaben innerhalb des Autoradios übernommen. In der Figur sind symbolisch ein Radioteil 12, ein Kassettendeck 13 und ein CD-Wechslerteil 14 angedeutet, deren Funktionen mittels der I²C-Bus-Steuerschaltung 11 gesteuert werden können. Die I²C-Bus-Steuerschaltung 11 ihrerseits wird mittels des Microcontrollers 1 gesteuert. Die I²C-Bus-Steuerschaltung 11 ist ebenfalls mit der Steuerschaltung 2 gekoppelt. Dies geschieht über Signale SDA und SCL, die den Dateninhalt bzw. ein Taktsignal beinhalten.

Die Steuerschaltung 2 ist über Interface-Schaltungen 15 bis 21 mit externen Signalen gekoppelt, deren Zustand bzw. deren Änderung sie laufend überwacht.

So ist beispielsweise die Interface-Schaltung 15 mit einem beliebigen Schalter des Autoradios gekoppelt. Wird dieser Schalter betätigt, gibt die Interface-Schaltung 15 nach Änderung des Signales SWITCH ein entsprechendes Signal an die Steuerschaltung 2.

In entsprechender Weise wird über die Interface-Schaltung 16 eine Betätigung des Ein/Ausschalters des Autoradios, über die Interface-Schaltung 17 eine Betätigung des Auswurfsschalters eines Laufwerks des Autoradios, über die Interface-Schaltung 18 ein Abnehmen oder Aufsetzen eines Bedienteils des Autoradios, über die Interface-Schaltung 19 die Überwachung der Zündungspannung des Fahrzeugs, über die Interface-Schaltung 20 Signale eines externen Busses, beispielsweise von einem CD-Wechsler, und über die Interface-Schaltung 21 eine Aktivierung eines Codes zum Diebstahlschutz des Autoradios signalisiert.

Wird über eine der Interface-Schaltungen 15 bis 21 also eine Änderung bzw. ein Auftreten des zugeordneten zu überwachenden Funktionssignals signalisiert, gibt die Steuerschaltung 2 ein Signal CHANGE-INFO an den Microcontroller 1. Damit wird diesem mitgeteilt, daß sich eines der Funktionssignale geändert hat, welches dieser Signale sich geändert hat und daß er gegebenenfalls Daten von der Steuerschaltung 2 abzufordern hat. Damit ist der Microcontroller 1 von der laufenden Überwachung der Funktionssignale entlastet.

Gegebenenfalls kann der Microcontroller 1 sich in einem inaktiven Zustand befinden, in welchem beispielsweise das Taktsignal des Microcontrollers 1 bezüglich seiner Frequenz vermindert ist.

Befindet sich der Microcontroller 1 bei Auftreten bzw. Änderung eines der Funktionssignale, die von den Interface-Schaltungen 15 bis 21 geliefert werden, in einem inaktiven Zustand, wird dies von der Steuerschaltung 2 erkannt und es wird zunächst ein Reset-Signal an den Microcontroller 1 gegeben, woraufhin dieser in den aktiven Zustand versetzt wird. Nachfolgend wird über das Signal CHANGE-INFO, das das Leseanforderungssignal darstellt, dem Microcontroller mitgeteilt, welches Signal sich geändert hat und es wird eine entsprechende Leseanforderung an den Microcontroller 1 gegeben.

Damit kann der Microcontroller 1 in einem inaktiven Zustand verbleiben, so lange keines der Funktionssignale sich ändert. Erst bei Änderung wird der Microcontroller 1 aktiviert und muß entsprechend auf das Funktionssignal reagieren. Dies wiederum wird mittels der Steuerschaltung 2 ausgelöst und gesteuert.

Die Steuerschaltung 2 ist über eine Verbindung 22 mit Bezugspotential verbunden. Ferner ist ein RC-Oszillator 24 vorgesehen oder es kann der Quarzoszillator angeschlossen werden. Die Steuerschaltung kann alternativ mit einem Quarz- oder RC-Oszillator betrieben werden (beide sind integriert). Die Steuerschaltung 2 ist ferner mit einem Quarzoszillator 23 zur Erzeugung eines internen Taktsignals gekoppelt.

Neben der oben erläuterten zentralen Funktion der Überwachung der Funktionssignale kann die Steuerschaltung 2 für weitere Einsatzzwecke herangezogen werden.

So ist beispielsweise die Steuerschaltung 2 über einen Widerstand 25 mit einer lichtemittierenden Diode (LED) 26 gekoppelt. Über diese Diode kann beispielsweise im ausgeschalteten Zustand des Autoradios ein Blinksignal als Diebstahlschutz abgegeben werden. Ferner kann die Frequenz dieses Blinksignals bei einer Störung der Steuerschaltung 2 geändert werden.

Die Steuerschaltung 2 kann intern ihr Taktsignal überwachen und bei einem Fehler des Taktsignals, bei dem auch eine einwandfreie Funktion der Steuerschaltung 2 nicht mehr gewährleistet ist, ein entsprechendes, in der Figur nicht näher angedeutetes Signal an den Microcontroller 1 geben.

In der Figur ist ferner ein Signal TIMER-START angedeutet, das von der Steuerschaltung 2 zur Überwachung sich zeitlich wiederholender Vorgänge an den Microcontroller 1 abgegeben wird. Beispielsweise kann über dieses Signal eine regelmäßige Überwachung der Höhe der Spannungen der Signale A7 und A4 mittels des Microcontrollers ausgelöst werden. Über das Signal wird die Steuerschaltung für einen festen Zeitraum (hier z.B. 250 ms) in den Stromsparmode versetzt, während dieser Zeit bleiben die Registerinhalte erhalten, die Steuerschaltung reagiert für diese Zeit jedoch auf keine Singale der Eingänge 15 bis 21. Nach Ablauf der Zeit generiert die Steuerschaltung einen Reset, um den Mcrocontroller aufzuwecken. Diese Funktion dient dazu, für die Dauer eines Spannungseinbruches der +14V das Gesamtsystem sehr schnell ohne die Notwendigkeit einer Kommunikation über I²C (SCL, SDA) in den Stromsparmode (Microcontroller ebenfalls) zu versetzen.

Die Steuerschaltung 2 ist ferner in der Lage zeitgesteuerte Signale an den Microcontroller 1, beispielsweise in dem Signal CHANGE-INFO, abzugeben.

Dieses wird mittels eines Zählers in der Steuerschaltung 2 vorgenommen, dessen zeitabhängig veränderter Zählerstand mit einem festen vorwählbaren Zählerstand verglichen wird. Bei Identität der Zählerstände wird ein entsprechendes Signal an den Microcontroller 1 gegeben, der abhängig von der Art des Signales reagiert. Dies kann beispielsweise für eine zeitgesteuerte Aufnahme von Verkehrsfunkdurchsagen eingesetzt werden.

Da der Steuerschaltung 2 die Versorgungsspannungen zugeführt werden bzw. Signale zur Überwachung dieser (A4-SENSE) zugeführt werden, kann die Steuerschaltung auch eine zeitgesteuerte Überwachung der Versorgungsspannung vornehmen. Auch kann festgestellt werden, wann und wie lange die Versorgungsspannungsanschlüsse des Gerätes nach einem Entfernen des Gerätes aus dem Fahrzeug hochohmig sind. Dieses kann als Diebstahls-Signal entsprechend an den Microcontroller 1 signalisiert werden, der entsprechend reagieren kann. In der Steuerschaltung 2 ist ferner ein in der Figur nicht näher angedeutete Watchdog-Schaltung realisiert, die eine Überwachung der Watchdog-Signale, die in der Figur mit WATCH-TRIG gekennzeichnet sind, vornimmt. Diese Signale müssen in sich regelmäßig wiederholenden Zeitabständen auftreten. Ist dies nicht der Fall, liegt eine Störung in der Funktion des Microcontrollers 1 vor.

Zusammenfassend ist festzustellen, daß die Steuerschaltung 2 diverse Funktionen übernehmen kann, die infolgedessen von dem Microcontroller 1 nicht mehr übernommen werden müssen und die diesen entsprechend entlasten. Die Steuerschaltung 2 gestattet es ferner, den Microcontroller 1 in einen inaktiven Zustand zu versetzen, auch wenn Funktionssignale zu überwachen sind. Ändert sich eines der Funktionssignale, reagiert die Steuerschaltung 2 abhängig davon, ob sich der Microcontroller 1 im inaktiven oder im aktiven Zustand befindet, dadurch, daß sie entweder nur das Leseanforderungssignal CHANGE-INFO oder zuvor auch ein Reset-Signal abgibt.

Gleichzeitig ist in der Steuerschaltung 2 eine zusätzliche Überwachung integriert, die sicherstellt, daß auf die Leseanforderung (CHANGE-INFO) reagiert wird. Reagiert der Microcontroller 1 innerhalb einer an das WATCH-TRIG gekoppelten, vorgegebenen Zeit nicht, geht die Steuerschaltung 2 von einer Funktionsstörung aus und generiert ein Reset-Signal.

Selbstverständlich können mittels der Steuerschaltung 2 weitere und andere Funktionen vorgenommen bzw. überwacht werden, als dies in dem Ausführungsbeispiel gemäß der Figur der Fall ist. Je nach Anwendungsgebiet bzw. nach Art des Gerätes, das von dem Microcontroller 1 gesteuert wird, kann es sich auch um andere Arten von überwachten Funktionen handeln.

## Patentansprüche

1. Steuerschaltung zur Steuerung, Unterstützung und Überwachung eines Microcontrollers (1), welche außerhalb des Microcontrollers (1), der mittels der Steuerschaltung rücksetzbar ist, aufgebaut ist und welche eine Watchdog-Schaltung aufweist, dadurch gekennzeichnet,
daß der Steuerschaltung (2) Funktionssignale zugeführt werden, welche vorgebbaren Funktionszuständen eines Gerätes (12,13,14) zugeordnet sind, welches von dem Microcontroller (1) gesteuert wird, daß die Steuerschaltung (2) bei Veränderung der Funktionssignale an den Microcontroller (1) ein Leseanforderungssignal gibt, welches den Microcontroller (1) veranlaßt, das veränderte externe Signal auszuwerten und/oder diesem zugeordnete Daten zu lesen und daß die Steuerschaltung (2) in dem Falle, daß der Microcontroller (1) sich bei Veränderung der Funktionssignale in einem inaktiven Zustand befindet, an diesen vor Abgabe des Leseanforderungssignals ein Reset-Signal gibt, das den Microcontroller (1) in einen aktiven Zustand versetzt, und nach Abgabe des Reset-Signals die Watchdog-Schaltung aktiviert.

2. Steuerschaltung nach Anspruch 1, dadurch gekennzeichnet,
daß die Steuerschaltung (2) und der Microcontroller (1) in einem Autoradio (12,13,14) vorgesehen sind, welches mittels des Microcontrollers (1) gesteuert wird, und daß es sich bei den vordefinierten externen Funktionen um solche des Autoradios (12,13,14) handelt, insbesondere um eine aktivierte Schaltspannung, einen ausgelösten Tastendruck am Autoradio (12,13,14), um eine in das Autoradio (12,13,14) eingeschobene Kassette oder um das Aufsetzen eines Bedienteils des Autoradios (12,13,14).

3. Steuerschaltung nach Anspruch 1, dadurch gekennzeichnet,
daß nach einem gegebenen Reset-Signal wenigstens während einer vordefinierten Zeitspanne keine weiteren Reset-Signale an den Microcontroller (1) gegeben werden.

4. Steuerschaltung nach Anspruch 1, dadurch gekennzeichnet,
daß die Watchdog-Schaltung nach einer mittels des Microcontrollers (1) erfolgten Überführung des Microcontrollers (1) in den deaktivierten Zustand deaktiviert wird und daß die Watchdog-Schaltung während des aktiven Zustands des Microcontrollers (1) nach deren Auslösung maximal fünfmal ein Reset-Signal an den Microcontroller (1) gibt.

5. Steuerschaltung nach Anspruch 1, dadurch gekennzeichnet,
daß in der Steuerschaltung (2) eine interne Überwachung eines internen Taktsignals erfolgt und daß, sollte das interne Taktsignal ausfallen, eine entsprechende Fehlermeldung an den Microcontroller (1) gegeben wird.

6. Steuerschaltung nach Anspruch 1, dadurch gekennzeichnet,
daß in der Steuerschaltung (2) ein zeitabhängiger Zähler vorgesehen ist, dessen Startwert veränderbar ist und dessen laufender Wert mit einem extern vorgebbaren Wert verglichen wird, wobei bei Identität des Zählerwertes und des vorgebbaren Wertes eine vorwählbare Funktion des Microcontrollers (1) ausgelöst wird.

7. Steuerschaltung nach Anspruch 1, dadurch gekennzeichnet,
daß die Steuerschaltung (2) einen Ausgang für ein Blinksignal liefert, dessen Blinkphasen bei Auftreten von Fehlern in der Steuerschaltung (2) und/oder in dem Microcontroller (1) in der Fehlerart zugeordneter Weise verändert wird.

8. Steuerschaltung nach Anspruch 1, dadurch gekennzeichnet,
daß die Steuerschaltung und der Microcontroller (1) in einem Autoradio (12,13,14) vorgesehen sind, daß die Steuerschaltung (2) einen Spannungsdetektionseingang aufweist, der im eingeschalteten Zustand des Autoradios (12,13,14) auf dessen Versorgungspotential und im ausgeschalteten Zustand auf Bezugspotential geschaltet ist, und daß die Steuerschaltung (2) eine Auswertung des Spannungsdetektionseingangs in der Weise vornimmt, daß ein Diebstahl erkannt und an den Microcontroller (1) gemeldet wird, wenn der Spannungsdetektionseingang sich auf keinem dieser beiden Potentiale befindet.

9. Steuerschaltung nach Anspruch 1, dadurch gekennzeichnet,
daß die Steuerschaltung (2) zur Detektion einer gegenüber dem Sollwert verringerten Höhe des Versorgungspotentials des Gerätes (12,13,14) in Zeitabständen, die mittels eines in der Steuerschaltung (2) vorgesehenen Zählers bestimmt werden, ein Timer-Signal an den Microcontroller (1) gibt, auf das hin dieser eine Messung der Höhe der Versorgungsspannung auslöst.

10. Steuerschaltung nach Anspruch 1, dadurch gekennzeichnet,
daß die Versorgungsspannung des Microcontrollers (1) mittels der Steuerschaltung (2) schaltbar ist und daß der Microcontroller (1) durch Abschalten des Versorgungspotentials mittels der Steuerschaltung (2) in den inaktiven Zustand schaltbar ist.
